# EUROPÄISCHE PATENTSCHRIFT

(11) **EP 1 213 187 B1**
(45) Veröffentlichungstag und Bekanntmachung des Hinweises auf die Patenterteilung: **11.05.2005**
(21) Anmeldenummer: 01128515.2
(22) Anmeldetag: 29.11.2001
(51) Int. Cl.: B60R 13/08, F02B 77/11, F01N 7/10

(54) **Schallabsorbierender Hitzeschild**
Sound insulating thermal shield
Ecran thermique insonorisant

(30) Priorität: 05.12.2000 DE 10060400
(43) Veröffentlichungstag der Anmeldung: 12.06.2002
(73) Patentinhaber: Carcoustics (Liechtenstein) AG, 9493 Mauren (LI)
(72) Erfinder: Pirchl, Christoph, 9490 Vaduz (LI); Profunser, Herbert, 6832 Muntlix (AT)
(74) Vertreter: COHAUSZ & FLORACK

(56) Entgegenhaltungen:
- US-A- 5 892 186

## Beschreibung

Gegenstand der Erfindung ist ein schallabsorbierender Hitzeschild nach dem Oberbegriff des Patentanspruchs 1.

Derartige Hitzeschilde werden zum Beispiel in Kraftfahrzeugen eingesetzt, um z. B. den Auspufftopf und andere hitzeführende Teile der Auspuffanlage - unter anderem auch den Katalysator - derart von der Karosserie abzuschirmen, daß keine nennenswerte Wärmestrahlung auf die Karosserie trifft und gleichzeitig eine wirksame Schallisolierung erfolgt.

Aus der EP 0 486 427 B1 ist es bekannt, als Hitzeschild ein Blechformteil, z.B. aus Aluminium, zu verwenden, welches nächst der Wärmequelle, z.B. einem Auspuffrohr, angeordnet ist und in der Art einer dreidimensional verformten Schale das Auspuffrohr nach oben hin in Richtung zur Karosserie abdeckt. Auf der dem hitzeführenden Teil abgewandten Seite des Blechformteils ist eine schallabsorbierende Wärmedämmschicht befestigt. Damit eine schallabsorbierende Wirkung erreicht wird, ist das Blechformteil über einen Großteil seiner Fläche perforiert bzw. mit Öffnungen versehen, so daß der Schall durch die Perforationen in das schallisolierende Wärmedämm-Material eindringen kann.

Damit besteht aber der Nachteil, daß das Wärmeabschirmblech seine wärmeabschirmende Wirkung zum Teil verliert, weil ein Teil der Wärmestrahlung die Öffnungen durchdringt, wobei die schallabsorbierende Wärmedämmschicht im Bereich der Öffnungen einer hohen Wärmebelastung ausgesetzt ist. Daher wird als schallisolierende Wärmedämmschicht z.B. ein hitzefestes Faservlies aus organischem oder anorganischem Material, wie z.B. mineralischer Schaumstoff, verwendet. Verringert oder verkleinert man die Öffnungen im Wärmedämmblech, um die Wärmereflexion zu erhöhen und die Wärmedämmschicht besser zu schützen, bewirkt dies eine schlechtere Schallisolation, da der Schall durch die wenigen Öffnungen nicht mehr ausreichend in das lsolationsmaterial eindringen kann.

Mit dem Gegenstand der gattungsbildenden US-A-5,892,186 ist ein Endschalldämpfer bekannt geworden, der zur Verbrennung von eingeleiteten, heißen Abgasen verwendet wird.

Der Endschalldämpfer beinhaltet ein verlängertes Gehäuse (15) welches eine Einlassöffnung (12) an einem Ende und einer Auslassöffnung (13) an dem gegenüberliegenden Ende aufweist. Ein Schalldämpfungsteilbereich beinhaltet einen konischen, konvergierenden, perforierten Verteilungsmantel (33) und einen Quersteg (45) im Inneren des Endschalldämpfergehäuses (15). Der Verteilungsmantel (33) verjüngt sich im innen auf einen Betrag und ergibt einen Querschnittsbereich (A3) zwischen dem Verteilungsmantel (33) und Gehäuse (15) am Quersteg (45), welcher mindestens gleich dem Bereich (A1) der Einlassöffnung (12) ist. Der kombinierte Bereich (A4) der Perforation (46) im Verteilungsmantel (33) hinter dem Quersteg (45) ist mindestens genauso gleich zum Bereich (A1) der Einlassöffnung (12). Ein perforierter Rückhaltemantel (17) ist intern im Gehäuse positioniert, radial außerhalb des Verteilungsmantels (33). Eine äußere Fieberglasschicht (20) ist in einer Ausnehmung (18) positioniert, zwischen der Gehäusewand (15) und des Verteilungsmantels (17) und eine innere Keramikschicht aus thermisch isolierendem Material (21) ist in der Ausnehmung (18) positioniert, um die Fieberglasschicht (20) von dem heißen Abgas thermisch zu isolieren. Diese Erfindung hat den Nachteil, dass die in dem Verteilungsmantel vorhandenen Öffnungen nicht durch zusätzliche Abdeckflächen abgedeckt sind und somit schlechtere schallabsorbierende Eigenschaften, sowie erhöhte Wärmestrahlungseigenschaften aufweist. Des weiteren dient die hier beschriebene Erfindung zur Reduzierung des Schall- und Wärmeaufkommens in röhrenförmigen Abgasbehältern.

Der Erfindung liegt deshalb die Aufgabe zugrunde, einen schallabsorbierenden Hitzeschild der eingangs genannten Art hinsichtlich der Wärmedämm- als auch der Schalldämmeigenschaften zu verbessern.

Zur Lösung der gestellten Aufgabe ist die Erfindung durch die Merkmale des Patentanspruchs 1 gekennzeichnet.

Erfindungsgemäß sind die Öffnungen im tragenden Blechformteil zumindest in Richtung der Wärme- und Schallquelle durch Abdeckflächen abgedeckt. Die Abdeckflächen sind einstückig aus dem Blechformteil geformt.

Dadurch wird erreicht, daß die von der Wärme-/Schallquelle abgegebene Wärmestrahlung nicht direkt in die Öffnungen und das darunterliegende schallabsorbierende Material eindringen kann und das Hitzeblech im wesentlichen seine volle Reflexionsfläche und seine volle lsolationswirkung behält. Für das schallabsorbierende Dämm-Material können somit weniger hitzefeste Materialien verwendet werden.

Andererseits sind die Abdeckflächen derart über den Öffnungen angeordnet, daß sich eine gute Schallführung in der schallabsorbierenden Wärmedämmschicht ergibt, so daß das durch die Abdeckflächen erzielte Plus an Wärmedämmeigenschaften nicht auf Kosten einer guten Schallisolierung geht.

Vorteilhafte Ausgestaltungen und Weiterbildungen der Erfindung ergeben sich aus den Unteransprüchen.

Vorzugsweise sind die Abdeckflächen derart über den Öffnungen angeordnet, daß sie diese gegenüber direkt von der Wärme- und Schallquelle abgestrahlte Wärmestrahlung abschirmen. Der Wärme-/Schallquelle wird so eine durchgehende Reflexionsfläche mit versteckten Öffnungen präsentiert.

Es ergeben sich mit dem Blechformteil verbundene dachförmige Abdeckflächen, die seitlich mindestens eine, von der Wärme-/Schallquelle im wesentlichen abgewandte, Öffnung aufweisen. Die Öffnungen sind im wesentlichen der Form der Abdeckflächen angepaßt und können rund, oval, drei- oder mehreckig ausgebildet sein.

Die Abdeckflächen können z.B. halbrund geformt sein, mit einer seitlichen ebenfalls halbrunden Öffnung. Die Abdeckflächen können ebenfalls satteldachförmig geformt sein, mit mindestens einer seitlichen, dreieckförmigen Öffnung.

In einer anderen Ausgestaltung können die Abdeckflächen im wesentlichen planeben ausgebildet und in einem spitzen Winkel zur Ebene des Blechformteils ausgerichtet sein.

In einer weiteren Ausgestaltung der Erfindung ist vorgesehen, daß die Abdeckflächen im wesentlichen planeben ausgebildet und in einer Ebene parallel zur Ebene des Blechformteils angeordnet sind, wobei die Abdeckflächen durch Stege mit dem Blechformteil verbunden sind. Dabei bilden sich ringsum seitliche Öffnungen aus, die ein Eindringen des Schalls in das Schallabsorptionsmedium erlauben.

Zur weiteren Stabilisierung des Hitzeschildes und zum Schutz des schallabsorbierenden Wärmedämm-Materials vor mechanischen Einflüssen und Verschmutzung kann vorgesehen sein, daß mit dem Blechformteil ein weiteres Blechformteil verbunden ist, wobei die schallisolierende Wärmedämmschicht zwischen den Blechformteilen angeordnet ist.

Nachfolgend werden mehrere Ausführungsbeispiele der Erfindung anhand von Zeichnungen näher beschrieben. Aus den Zeichnungen und der Beschreibung ergeben sich weitere Merkmale, Vorteile und Anwendungen der Erfindung.

Es zeigen:
- Fig. 1:: eine erste Ausführungsform des erfindungsgemäßen Hitzeschildes im Querschnitt;
- Fig. 2:: eine zweite Ausführungsform des erfindungsgemäßen Hitzeschildes im Querschnitt;
- Fig. 3:: einen Schnitt durch die Ausführungsform gemäß Figur 2 entlang der Linie A-A in Figur 2;
- Fig. 4A, 4B, 4C:: eine vergrößerte Darstellung einer ersten Ausführungsform einer Abdeckfläche in verschiedenen Ansichten;
- Fig. 5A, 5B, 5C:: eine vergrößerte Darstellung einer zweiten Ausführungsform einer Abdeckfläche in verschiedenen Ansichten;
- Fig. 6A, 6B, 6C:: eine vergrößerte Darstellung einer dritten Ausführungsform einer Abdeckfläche in verschiedenen Ansichten;
- Fig. 7A, 7B, 7C:: eine vergrößerte Darstellung einer vierten Ausführungsform einer Abdeckfläche in verschiedenen Ansichten.

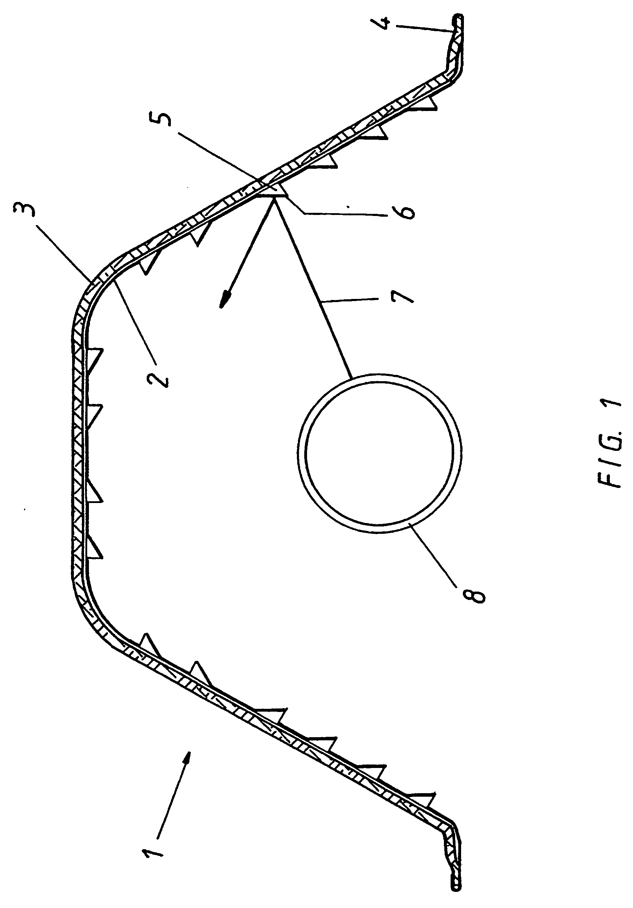

In Figur 1 ist eine erste Ausführungsform des Hitzeschildes im Querschnitt dargestellt. Man erkennt eine Wärme- und Schallquelle 8, die vom Hitzeschild 1 an drei Seiten umgeben ist.

Das Hitzeschild 1 umfaßt ein formstabiles Blechformteil 2, das im Beispiel etwa u-förmig ausgebildet ist und die Wärme- und Schallquelle teilweise umgibt.

Das Blechformteil ist zumindest an der Innenseite, d.h. der Wärme- und Schallquelle 8 zugewandten Seite, stark reflektierend ausgebildet, so daß die von der Wärmeund Schallquelle 8 ausgehende Wärmestrahlung 7 größtenteils von dem Blechformteil 2 reflektiert wird.

Auf der der Wärme- und Schallquelle 8 abgewandten Seite ist das Blechformteil 2 mit einer schallabsorbierenden Wärmedämmschicht 3 versehen, die über Bördel 4 mit dem Blechformteil 2 verbunden ist.

Diese schallabsorbierende Wärmedämmschicht absorbiert einerseits den von der Wärme- und Schallquelle 8 abgestrahlten Schall und hat andererseits Isolationswirkung auf die das Blechformteil 2 durchdringende Wärme.

Erfindungsgemäß besitzt das Blechformteil 2 Öffnungen 5, die ein Eindringen des von der Wärme- und Schallquelle 8 abgestrahlten Schalls in das schallabsorbierende Medium 3 ermöglichen.

Diese Öffnungen 5 sind jedoch durch Abdeckflächen 6 abgedeckt, die derart ausgerichtet sind, daß die direkt von der Schall- und Wärmequelle 8 abgestrahlte Wärmestrahlung 7 nie direkt in die Öffnung 5 gelangen kann, sondern von den Abdeckflächen 6 reflektiert wird.

Der von der Wärme- und Schallquelle 8 abgestrahlte Schall kann jedoch ungehindert in die Öffnungen 5 eindringen.

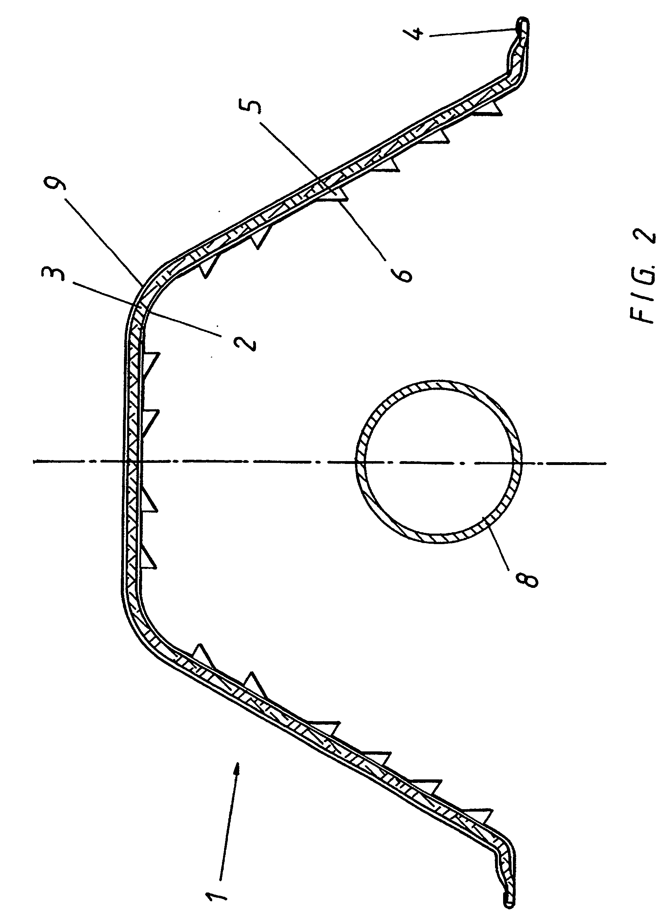

Figur 2 zeigt eine weitere Ausführungsform des erfindungsgemäßen Hitzeschildes 1, wobei das Hitzeschild zweischalig ausgeführt ist und aus zwei Blechformteilen 2, 9 besteht, welche die schallabsorbierende Wärmedämmschicht 3 zwischen sich aufnehmen.

Die Blechformteile 2, 9 sowie das schallabsorbierende Wärmedämm-Material 3 sind über Bördel 4 miteinander verbunden. Das Blechformteil 2 weist, wie auch in Figur 1 gezeigt, die Öffnungen mit den erfindungsgemäßen Abdeckungen 6 auf.

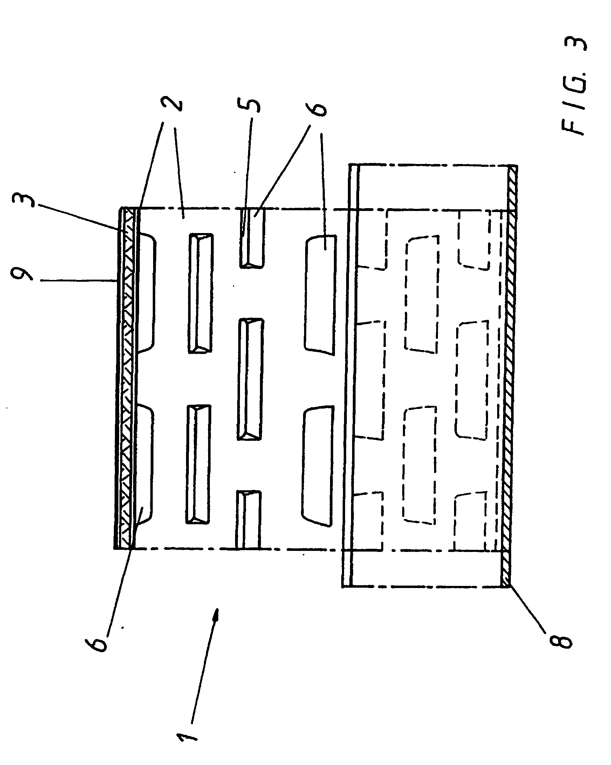

Figur 3 zeigt einen Schnitt durch die Darstellung gem. Figur 2 entlang der Linie A-A, wobei man die im Beispiel langgestreckten Öffnungen 5 erkennt, die von entsprechenden Abdeckflächen 6 abgedeckt sind.

Die Öffnungen werden ausgestanzt und die Abdeckflächen entsprechend im Winkel gebogen.

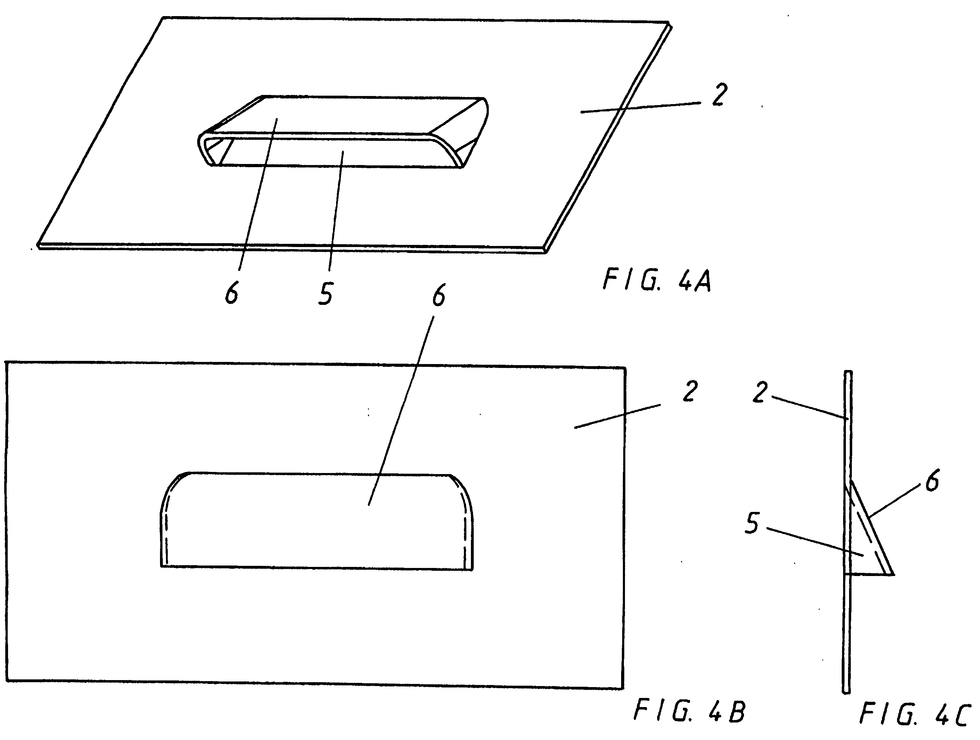

Figuren 4A bis 4C zeigen eine vergrößerte Darstellung der Öffnungen 5 mit Abdeckflächen 6, so wie sie in den Figuren 1 bis 3 Verwendung finden. Man erkennt, daß die Abdeckflächen 6 die Öffnungen 5 vollständig überdecken, wenn man senkrecht auf das Blechformteil 2 blickt (Figur 4B). Jedoch kann der Schall seitlich in die Öffnung 5 eindringen.

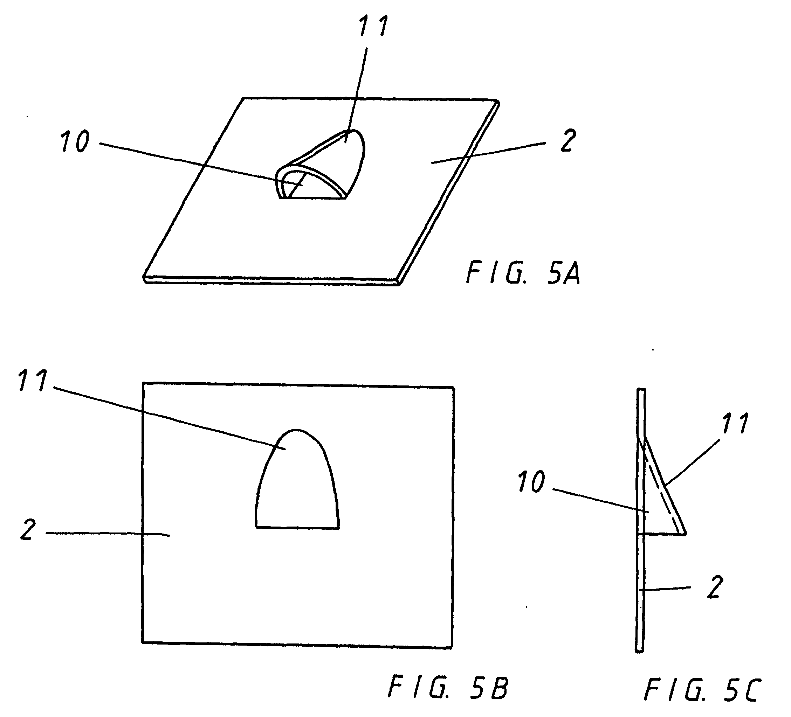

Die Figuren 5A bis 5C zeigen eine weitere Ausführungsform der erfindungsgemäßen Öffnungen 10 mit Abdeckflächen 11, die im Beispiel etwa halbkreisförmig ausgebildet sind.

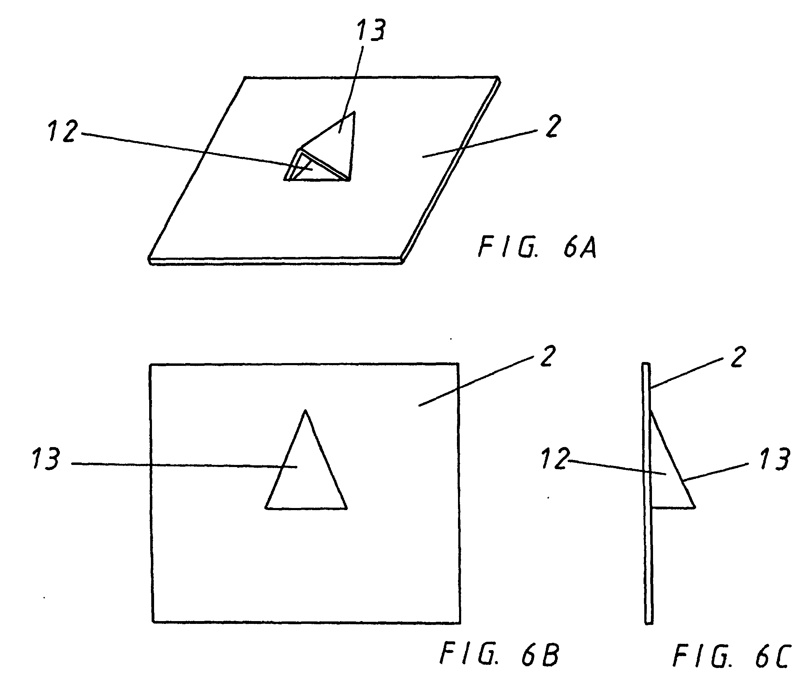

Die Figuren 6A bis 6C zeigen eine weitere Ausführungsform mit etwa schatteldachförmigen Abdeckflächen 13, die eine etwa dreieckige Öffnungsfläche 12 definieren.

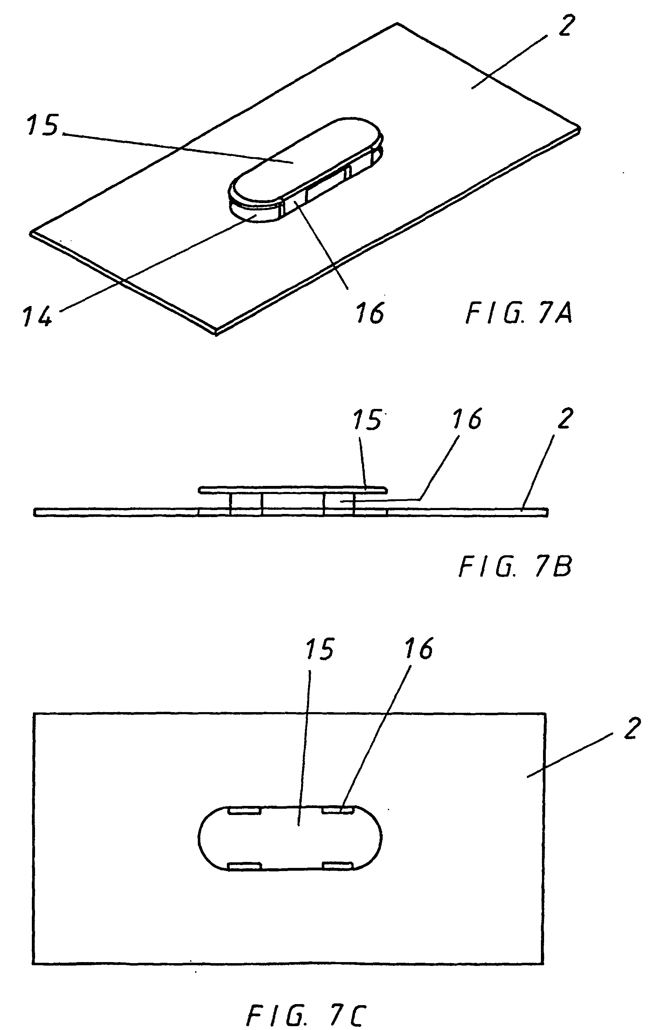

Eine weitere Ausführungsform der Öffnungen mit Abdeckflächen ist in den Figuren 7A bis 7C gezeigt. Hierbei ist die Abdeckfläche etwa planeben ausgebildet und parallel zur Ebene des Blechformteils 2 ausgerichtet.

Die Abdeckfläche 15 ist über Stege 16 mit dem Blechformteil 2 verbunden, wobei Durchtritt des Schalls in die Öffnung 14 von allen Seiten möglich ist.

Erfindungsgemäß sind alle möglichen Formen von Öffnungen und zugehörigen Abdeckflächen denkbar, solange die Öffnung vor direkter Wärmeeinstrahlung durch die Schall- und Wärmequelle 8 geschützt ist. Durch die Abdeckflächen ergibt sich auch eine nahezu vollflächige Reflexionsfläche, da die Öffnungen aus der Sicht der Wärme- und Schallquelle 8 nicht sichtbar sind.

### Zeichnungslegende

- 1: Hitzeschild
- 2: Blechformteil
- 3: Wärmedämmschicht
- 4: Bördel
- 5: Öffnung
- 6: Abdeckfläche
- 7: Wärmestrahlung
- 8: Wärme-/Schallquelle
- 9: Blechformteil
- 10: Öffnung
- 11: Abdeckfläche
- 12: Öffnung
- 13: Abdeckfläche
- 14: Öffnung
- 15: Abdeckfläche
- 16: Steg

## Patentansprüche

1. Schallabsorbierender Hitzeschild zur Abschirmung einer Wärme- und Schallquelle, mit einem formstabilen, mit Öffnungen (5, 10, 12, 14) versehenen, Blechformteil (12), auf dessen der Wärme- und Schallquelle abgewandten Seite eine schallabsorbierende Wärmedämmschicht (3) aufgebracht ist, wobei die Öffnungen (5, 10, 12, 14) zumindest in Richtung der Wärme- und Schallquelle (8) durch Abdeckflächen (6, 11, 13, 15) abgedeckt sind, **dadurch gekennzeichnet, dass** die Abdeckflächen (6, 11, 13, 15) einstückig aus dem Blechformteil (2) geformt sind.

2. Hitzeschild nach Anspruch 1, **dadurch gekennzeichnet, daß** die Abdeckflächen (6, 11, 13, 15) derart angeordnet sind, dass sie die Öffnungen (5, 10, 12, 14) mit den Abdeckflächen (6, 11, 13, 15) gegenüber direkt von der Wärme- und Schallquelle (8) abgestrahlten Wärmestrahlung (7) abschirmen.

3. Hitzeschild nach einem der Ansprüche 1 bis 2, **dadurch gekennzeichnet, dass** die Abdeckflächen (11) halbrund geformt sind.

4. Hitzeschild nach einem der Ansprüche 1 bis 2, **dadurch gekennzeichnet, dass** die Abdeckflächen (13) satteldachförmig geformt sind.

5. Hitzeschild nach einem der Ansprüche 1 bis 2, **dadurch gekennzeichnet, dass** die Abdeckflächen (6) im wesentlichen planeben und in einem spitzen Winkel zur Ebene des Blechformteils (2) ausgerichtet sind.

6. Hitzeschild nach einem der Ansprüche 1 bis 2, **dadurch gekennzeichnet, dass** die Abdeckflächen (15) im wesentlichen planeben und in einer Ebene parallel zur Ebene des Blechformteils (2) angeordnet sind.

7. Hitzeschild nach Anspruch 6, **dadurch gekennzeichnet, dass** die Abdeckflächen (15) durch Stege (16) mit dem Blechformteil (2) verbunden sind.

8. Hitzeschild nach einem der Ansprüche 1 bis 7, **dadurch gekennzeichnet, dass** die Öffnungen (5, 10, 12, 14) im wesentlichen der Form der Abdeckflächen (6, 11, 13, 15) angepaßt und rund, oval, drei- oder mehreckig ausgebildet sind.

9. Hitzeschild nach einem der Ansprüche 1 bis 8, **dadurch gekennzeichnet, dass** mit dem Blechformteil (2) ein weiteres Blechformteil (9) verbunden ist, wobei die schallisolierende Wärmedämmschicht (3) zwischen den Blechformteilen angeordnet ist.

## Claims

1. Sound-absorbing heat-shield for shielding a thermal and acoustic source, with a dimensionally stable metal stamping (2) provided with openings (5, 10, 12, 14) and clad, on the side facing away from the thermal and acoustic source, with a sound-absorbing heat-insulation layer (3), wherein the openings (5, 10, 12, 14) are masked, at least towards the thermal and acoustic source (8), by masking surfaces (6, 11, 13, 15), **characterized in that** the masking surfaces (6, 11, 13, 15) are integrally formed out of the metal stamping (2).

2. Heat-shield according to Claim 1, **characterized in that** the masking surfaces (6, 11, 13, 15) are arranged so that they directly shield the openings (5, 10, 12, 14) opposite the masking surfaces (6, 11, 13, 15) from the heat (7) radiated by the thermal and acoustic source (8).

3. Heat-shield according to either of Claims 1 and 2, **characterized in that** the masking surfaces (11) have a semi-circular shape.

4. Heat-shield according to either of Claims 1 and 2, **characterized in that** the masking surfaces (13) are shaped like a gable roof.

5. Heat-shield according to either of Claims 1 and 2, **characterized in that** the masking surfaces (6) are substantially flat and are orientated at an acute angle to the plane of the metal stamping (2).

6. Heat-shield according to either of Claims 1 and 2, **characterized in that** the masking surfaces (15) are substantially flat and are arranged in a plane parallel with the plane of the metal stamping (2).

7. Heat-shield according to Claim 6, **characterized in that** the masking surfaces (15) are joined by webs (16) to the metal stamping (2).

8. Heat-shield according to any one of Claims 1 to 7, **characterized in that** the openings (5, 10, 12, 14) are substantially matched to the shape of the masking surfaces (6, 11, 13, 15), and are formed with round, oval, triangular or polygonal shapes.

9. Heat-shield according to any one of Claims 1 to 8, **characterized in that** a further metal stamping (9) is joined to the metal stamping (2), the soundproofing heat-insulation layer (3) being arranged between the metal stampings.

## Revendications

1. Ecran thermique insonorisant pour isoler une source de chaleur et de bruit, comportant une pièce profilée en tôle (2) indéformable et pourvue d'ouvertures (5, 10, 12, 14) dont le côté opposé à ladite source de chaleur et de bruit est recouvert d'une couche calorifuge insonorisante (3), les ouvertures (5, 10, 12, 14) étant couvertes par des surfaces de recouvrement (6, 11, 13, 15) au moins en direction de la source de chaleur et de bruit (8), **caractérisé en ce que** les surfaces de recouvrement (6, 11, 13, 15) sont réalisées d'une seule pièce dans la pièce profilée en tôle (2).

2. Ecran thermique selon la revendication 1, **caractérisé en ce que** les surfaces de recouvrement (6, 11, 13, 15) sont disposées de telle sorte qu'elles isolent les ouvertures (5, 10, 12, 14) par rapport au rayonnement de chaleur (7) émis directement par la source de chaleur et de bruit (8).

3. Ecran thermique selon la revendication 1 ou 2, **caractérisé en ce que** les surfaces de recouvrement (11) ont une forme semi-circulaire.

4. Ecran thermique selon la revendication 1 ou 2, **caractérisé en ce que** les surfaces de recouvrement (13) ont la forme d'un toit à deux versants.

5. Ecran thermique selon la revendication 1 ou 2, **caractérisé en ce que** les surfaces de recouvrement (6) sont sensiblement planes et sont dirigées suivant un angle aigu par rapport au plan de la pièce profilée en tôle (2).

6. Ecran thermique selon la revendication 1 ou 2, **caractérisé en ce que** les surfaces de recouvrement (15) sont sensiblement planes et sont disposées dans un plan parallèle au plan de la pièce profilée en tôle (2).

7. Ecran thermique selon la revendication 6, **caractérisé en ce que** les surfaces de recouvrement (15) sont reliées à la pièce profilée en tôle (2) grâce à des pattes (16).

8. Ecran thermique selon l'une des revendications 1 à 7, **caractérisé en ce que** les ouvertures (5, 10, 12, 14) sont sensiblement adaptées à la forme des ouvertures de recouvrement (6, 11, 13, 15) et ont une forme ronde, ovale, triangulaire ou polygonale.

9. Ecran thermique selon l'une des revendications 1 à 8, **caractérisé en ce qu'**une autre pièce profilée en tôle (9) est reliée à la pièce profilée en tôle (2), la couche calorifuge insonorisante (3) étant disposée entre les pièces profilées en tôle.
